# EUROPEAN PATENT APPLICATION

(11) **EP 4 418 361 A1**
(43) Date of publication of application: **21.08.2024**
(21) Application number: 23803699.0
(22) Date of filing: 04.04.2023
(51) Int. Cl.: H01M 4/525, H01M 4/36, C01G 53/00, H01M 4/02

(54) **METHOD FOR PRODUCING POSITIVE ELECTRODE ACTIVE MATERIAL**

(30) Priority: 10.05.2022 KR 20220057424
(71) Applicant: LG Chem, Ltd., Yeongdeungpo-gu Seoul 07336 (KR)
(72) Inventor: LEE, Woo Ram, Daejeon 34122 (KR); KIM, Dong Jin, Daejeon 34122 (KR); CHOI, Sang Soon, Daejeon 34122 (KR); KIM, Jae Geun, Daejeon 34122 (KR)
(74) Representative: Hoffmann Eitle
(86) International application number: PCT/KR2023/004537
(87) International publication number: WO 2023/219274

(57) **Abstract**

The present invention relates to a method for preparing a positive electrode active material capable of implementing a battery excellent in both initial capacity and lifespan properties includes (A) mixing a positive electrode active material precursor containing 80 mol% or greater of nickel (Ni) in all metals with a lithium-containing raw material, and then performing primary firing on the mixture to prepare a primary fired product, and (B) mixing the primary fired product and a nickel compound, and then performing secondary firing on the mixture to prepare a lithium transition metal oxide, wherein the nickel compound is added such that the mol% of nickel contained in the nickel compound is greater than 0.01 mol% to less than 0.15 mol% based on the total number of moles of the metals contained in the positive electrode active material precursor.

## Description

### TECHNICAL FIELD

### Cross-reference to Related Applications

This application claims the benefit of Korean Patent Application No. 10-2022-0057424, filed on May 10, 2022, in the Korean Intellectual Property Office, the disclosure of which is incorporated herein in its entirety by reference.

### Technical Field

The present invention relates to a method for preparing a positive electrode active material.

### BACKGROUND ART

Among positive electrode active materials used in lithium secondary batteries, the performance of positive electrode active materials having a layered structure is improving day by day for the purpose of being applied to electric vehicles (EV) such as electric cars.

The higher the electrochemical capacity that a positive electrode active material can exert, the higher the energy density, and battery manufacturers around the world are striving to preempt positive electrode active materials with high energy density, and as a result, positive electrode active materials having a layered structure with a high nickel content are becoming the most talked about topic.

However, as the nickel content increases, there is a problem in that the electrochemical performance of a positive electrode active material is rapidly deteriorated when charging and discharging are repeated several times. That is, when the content of nickel in all metals except lithium is increased to 80 mol% or greater in order to increase energy density, charging and discharging capacity are increased, but as an increase rate of discharge resistance increases, there is a problem in that lifespan properties (capacity retention rate and gas generation amount, etc.) are rapidly deteriorated.

### DISCLOSURE OF THE INVENTION

### TECHNICAL PROBLEM

An aspect of the present invention provides a method for preparing a positive electrode active material capable of implementing a battery excellent in both initial capacity and lifespan properties.

### TECHNICAL SOLUTION

According to an aspect of the present invention, there is provided a method for preparing a positive electrode active material.

(1) The present invention provides a method for preparing a positive electrode active material, the method including (A) mixing a positive electrode active material precursor containing 80 mol% or greater of nickel (Ni) in all metals with a lithium-containing raw material, and then performing primary firing on the mixture to prepare a primary fired product, and (B) mixing the primary fired product and a nickel compound, and then performing secondary firing on the mixture to prepare a lithium transition metal oxide, wherein the nickel compound is added such that the mol% of nickel contained in the nickel compound is greater than 0.01 mol% to less than 0.15 mol% based on the total number of moles of the metals contained in the positive electrode active material precursor.
(2) In (1) above, the present invention provides a method for preparing a positive electrode active material, wherein the positive electrode active material precursor has a composition represented by Formula 1-1 or Formula 1-2 below.

   [Formula 1-1] Niₐ₁Co_{b1}Mn_{c1}M¹_{d1}(OH)₂

   [Formula 1-2] Niₐ₁Co_{b1}Mn_{c1}M¹_{d1}O·OH

   In Formula 1-1 and Formula 1-2 above,
   M¹ is one or more selected from Al, Zr, B, W, Mg, Ce, Hf, Ta, La, Ti, Sr, Ba, Ce, Hf, F, P, S, Y, and La, and
   0.80≤a1<1.0, 0<b1≤0.20, 0<c1≤0.20, 0≤d1≤0.10, and a1+b1+c1+d1=1.
(3) In (1) or (2) above, the present invention provides a method for preparing a positive electrode active material, wherein the nickel compound has an average particle diameter (D₅₀) of less than 3 µm.
(4) In (1) to (3) above, the present invention provides a method for preparing a positive electrode active material, wherein the nickel compound is one or more selected from Ni(OH)₂, NiO, NiCO₃, NiSO₄, NiF₂, NiCl₂, NiBr₂, NiI₂, 2Ni(OH)₂·4H₂O, NiC₂O₄·2H₂O, Ni(NO₃)₂·6H₂O, and NiSO₄·6H₂O.
(5) In (1) to (4) above, the present invention provides a method for preparing a positive electrode active material, wherein the nickel compound is added such that the mol% of nickel contained in the nickel compound is greater than 0.01 mol% to 0.14 mol% or less based on the total number of moles of the metals contained in the positive electrode active material precursor.
(6) In (1) to (5) above, the present invention provides a method for preparing a positive electrode active material, wherein the nickel compound is added such that the nickel compound is added such that the mol% of nickel contained in the nickel compound is 0.02 mol% to 0.10 mol% based on the total number of moles of the metals contained in the positive electrode active material precursor.
(7) In any one of (1) to (6) above, the present invention provides a method for preparing a positive electrode active material, wherein the primary firing is performed at a temperature between 600°C and 750°C.
(8) In any one of (1) to (7) above, the present invention provides a method for preparing a positive electrode active material, wherein the secondary firing is performed at a temperature between 750°C and 900°C.
(9) In any one of (1) to (8) above, the present invention provides a method for preparing a positive electrode active material, wherein the secondary firing is performed at a temperature higher than that of the primary firing.
(10) In any one of (1) to (9) above, the present invention provides a method for preparing a positive electrode active material, wherein the method further includes (C) forming a coating layer by mixing a coating element-containing raw material with the lithium transition metal oxide and heat-treating the mixture.

### ADVANTAGEOUS EFFECTS

According to the present invention, when a nickel compound is added in a specific amount to the above primary fired product and then the mixture is subjected to secondary firing, both initial properties and lifespan properties of a battery using a positive electrode active material prepared thereby may be improved.

### BEST MODE FOR CARRYING OUT THE INVENTION

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

In the present specification, it should be understood that the terms "include," "comprise," or "have" are intended to specify the presence of stated features, numbers, steps, elements, or combinations thereof, but do not preclude the presence or addition of one or more other features, numbers, steps, elements, or combinations thereof.

Hereinafter, the present invention will be described in more detail.

### Method for preparing positive electrode active material

The present inventors have found that, when preparing a positive electrode active material having a high nickel content, if a positive electrode active material precursor and a lithium-containing raw material are fired twice (primary firing and secondary firing), and if a nickel compound is added in a specific amount prior to the secondary firing, the performance of a battery using the prepared positive electrode active material is improved, and have completed the present invention.

A method for preparing a positive electrode active material according to the present invention includes (A) mixing a positive electrode active material precursor containing 80 mol% or greater of nickel (Ni) in all metals with a lithium-containing raw material, and then performing primary firing on the mixture to prepare a primary fired product, and (B) mixing the primary fired product and a nickel compound, and then performing secondary firing on the mixture to prepare a lithium transition metal oxide, wherein the nickel compound is added such that the mol% of nickel contained in the nickel compound is greater than 0.01 mol% to less than 0.15 mol% based on the total number of moles of the metals contained in the positive electrode active material precursor.

The method for preparing a positive electrode active material according to the present invention may further include (C) forming a coating layer by mixing a coating element-containing raw material with the lithium transition metal oxide and heat-treating the mixture.

Hereinafter, the method for preparing a positive electrode active material will be described in detail.

### (A) step and (B) step

The method for preparing a positive electrode active material according to the present invention includes (A) mixing a positive electrode active material precursor containing 80 mol% or greater of nickel (Ni) in all metals with a lithium-containing raw material, and then performing primary firing on the mixture to prepare a primary fired product, and (B) mixing the primary fired product and a nickel compound, and then performing secondary firing on the mixture to prepare a lithium transition metal oxide. At this time, the nickel compound is added such that the mol% of nickel contained in the nickel compound is greater than 0.01 mol% to less than 0.15 mol% based on the total number of moles of the metals contained in the positive material precursor.

A positive electrode active material prepared according to the preparation method of the present invention is coated, on the surface thereof, with an appropriate amount of nickel which exerts high capacity performance, and thus, when applied to a lithium secondary battery, the initial capacity of the battery is improved, and also, the charge transfer resistance on the surface of the positive electrode active material is lowered, which results in achieving an effect of improving lifespan properties, and particularly, an effect of significantly reducing a resistance increase rate.

According to the present invention, the nickel compound may be added such that the mol% of the nickel contained in the nickel compound is greater than 0.01 mol% to less than 0.15 mol%, specifically greater than 0.01 mol%, 0.02 mol%, 0.04 mol%, 0.06 mol%, 0.08 mol% or greater, 0.10 mol%, 0.12 mol%, 0.14 mol% or less, and less than 0.15 mol% based on the total number of moles of the metals contained in the positive material precursor. In this case, nickel is coated in an appropriate amount on the surface of the positive electrode active material, so that charging and discharging capacity may be improved while there is no side effect of lifespan deterioration.

When the nickel compound is added such that the mol% of nickel contained in the nickel compound is 0.01 mol% or less based on the total number of moles of the metals contained in the positive electrode active material precursor, the surface of the positive electrode active material is not completely covered due to the insufficient nickel coating amount, so that there may be a problem in that the coating effect is almost insignificant.

When the nickel compound is added such that the mol% of nickel contained in the nickel compound is 0.15 mol% or greater based on the total number of moles of the metals contained in the positive electrode active material precursor, a coating film in the form in which non-uniform parts are agglomerated is formed due to excessive nickel coating, so that there may be a problem in that lifespan properties of the positive electrode active material are significantly deteriorated.

According to the present invention, the positive electrode active material precursor may have a composition represented by Formula 1-1 or Formula 1-2 below.

[Formula 1-1] Niₐ₁Co_{b1}Mn_{c1}M¹_{d1}(OH)₂

[Formula 1-2] Niₐ₁Co_{b1}Mn_{c1}M¹_{d1}O·OH

In Formula 1-1 and Formula 1-2 above,
M¹ is one or more selected from Al, Zr, B, W, Mg, Ce, Hf, Ta, La, Ti, Sr, Ba, Ce, Hf, F, P, S, Y, and La, and
0.80≤a1<1.0, 0<b1≤0.20, 0<c1≤0.20, 0≤d1≤0.10, and a1+b1+c1+d1=1.

The a1 represents the atomic fraction of nickel among metal elements in the precursor, and may be 0.80, 0.85 or greater, 0.95, 0.98 or less, or less than 1.0.

The b1 represents the atomic fraction of cobalt among metal elements in the precursor, and may be greater than 0, 0.01, 0.02 or greater, 0.05, 0.10, or 0.20 or less.

The c1 represents the atomic fraction of manganese among metal elements in the precursor, and may be greater than 0, 0.01, 0.02, 0.05 or greater, 0.10, or 0.20 or less.

The d1 represents the atomic fraction of an M¹ element among metal elements in the precursor, and may be 0, 0.01 or greater, 0.02, 0.05, 0.10, or 0.10 or less.

The lithium-containing raw material may be, for example, one or more selected from the group consisting of lithium carbonate (Li₂CO₃), lithium hydroxide(LiOH), LiNO₃, CH₃COOLi, and Li₂(COO)₂, and may preferably be lithium carbonate(Li₂CO₃), lithium hydroxide(LiOH), or a combination thereof.

When preparing a positive electrode active material, the positive electrode active material precursor and the lithium-containing raw material may be mixed at a molar ratio of 1:1 to 1:1.625, or 1:1 to 1:1.15. If the lithium-containing raw material is mixed in a range less than the above range, the capacity of a positive electrode active material to be manufactured may be degraded. If the lithium-containing raw material is mixed in a range greater than the above range, unreacted Li remains as a by-product, and the degradation in capacity and the separation of positive electrode active material particles(causing positive electrode active material aggregation) after firing may occur.

When the positive electrode active material precursor and the lithium-containing raw material are mixed, a doping element-containing raw material may be additionally further mixed. A metal element included in the doping element-containing raw material may be Al, Zr, B, W, Mo, Cr, Nb, Mg, Hf, Ta, La, Ti, Sr, Ba, Ce, F, P, S, Y, or the like. The doping element-containing raw material may be an acetate, nitrate, sulfate, halide, sulfide, hydroxide, oxide, oxyhydroxide, or the like including the metal element. For example, when the metal element is Al bromine, an aluminum hydroxide (Al(OH)₃) may be used, and when the metal element is Zr, a zirconium oxide (ZrO₂) may be used.

According to the present invention, the nickel compound may have an average particle diameter (D₅₀) of less than 3 um. Specifically, the average particle diameter (D₅₀) of the nickel compound may be greater than 0.01 um to less than 3 µm, more specifically greater than 0.05 um to less than 2.5 um. In addition, the nickel compound may have a maximum particle diameter (Dₘₐₓ) of 12 µm or less. In this case, since the above maximum particle diameter is similar to or smaller than the particle diameter of a positive electrode active material, uniform coating is possible in terms of atomic diffusion to the surface of the positive electrode active material during coating, so that a positive electrode active material to be prepared may have uniform properties.

According to the present invention, the nickel compound may be a hydroxide, oxide, carbonate, acetate, nitrate, sulfate, halide, sulfide, hydrate of nickel, or the like, and specifically, may be one or more selected from Ni(OH)₂, NiO, NiCO₃, NiSO₄, NiF₂, NiCl₂, NiBr₂, NiI₂, 2Ni(OH)₂·4H₂O, NiC₂O₄·2H₂O, Ni(NO₃)₂·6H₂O, and NiSO₄·6H₂O. Specifically, the nickel compound may have a melting point or decomposition temperature of 700 °C or lower.

According to the present invention, the primary firing may be performed at a temperature of 600 °C to 750 °C. Specifically, the primary firing may be performed at a temperature of 600 °C, 650 °C, 700 °C or higher, 730 °C, 740 °C, or 750 °C or lower. The primary firing is a step of mixing and reacting the positive electrode active material precursor with a lithium raw material, and since the firing is performed at a relatively low temperature of 600 °C to 750 °C, it is possible to control the strength of a primary fired product to be low. This is because the strength of a fired product is weak as a lithium by-product on a particle surface is fired at a relatively low temperature.

According to the present invention, the secondary firing may be performed at a temperature of 750 °C to 900 °C. In addition, the secondary firing may be performed at a temperature higher than that of the primary firing. Specifically, the secondary firing may be performed at a temperature of 750 °C, 760 °C, 770 °C or higher, 800 °C, 850 °C, or 900 °C or lower. The secondary firing is a step in which a small amount of residual lithium which has not been reacted during the primary firing reacts, and the secondary firing is performed at a temperature relatively higher than the primary firing temperature, and thus, may help effective crystal growth.

After the secondary firing in the step (B), washing, filtration, and drying processes, which are generally performed to remove residual lithium which may be present on the surface of a lithium transition metal oxide, may be performed.

The washing process may be performed by using a washing solution such as deionized water, distilled water, ethanol, and the like, and the content of the washing solution may be 50 parts by weight to 150 parts by weight with respect to 100 parts by weight of a second fired product. The washing may be performed at a temperature of 5 °C to 40 °C for 1 minute to 30 minutes. In this case, the surface deterioration of the positive electrode active material occurring in the washing process may be minimized while effectively removing residual ions on the surface of the positive electrode active material.

The filtration and drying processes are processes for removing moisture from the positive electrode active material containing moisture through the water washing process. The filtration may be performed using a filter press, and the drying may be performed at a temperature of 100 °C to 150 °C, and may be performed in a vacuum state.

### (C) step

The method for preparing a positive electrode active material according to the present invention may further include forming a coating layer by mixing a coating element-containing raw material with the lithium transition metal oxide and heat-treating the mixture.

A metal element included in the coating element-containing raw material may be Zr, B, W, Mo, Cr, Nb, Mg, Hf, Ta, La, Ti, Sr, Ba, Ce, F, P, S, Y, or the like. The coating element-containing raw material may be an acetate, nitrate, sulfate, halide, sulfide, hydroxide, oxide, oxyhydroxide, or the like including the metal element. For example, when the metal element is B, boric acid (H₃BO₃) or the like may be used.

The coating element-containing raw material may be included in a weight of 200 ppm to 2000 ppm with respect to the lithium transition metal oxide. When the content of the coating element-containing raw material is within the above range, the capacity of a battery may be improved, and a formed coating layer may suppress a direct reaction between an electrolyte solution and the lithium transition metal oxide, thereby improving long-term performance properties of the battery.

The heat-treatment in the step (c) may be performed at a temperature of 200 °C to 400 °C. When the heat-treatment temperature is within the above range, a coating layer may be formed while maintaining the structural stability of the transition metal oxide. The heat-treatment may be performed for 1 hour to 10 hours. When the heat-treatment duration is within the above range, a suitable coating layer may be formed and production efficiency may be improved.

### Positive electrode

In addition, the present invention may provide a positive electrode for a lithium secondary battery, the positive electrode including a positive electrode active material prepared by the method described above.

Specifically, the positive electrode includes a positive electrode current collector, and a positive electrode active material layer positioned on at least one surface of the positive electrode current collector, and including a positive electrode active material prepared by the above-described method.

The positive electrode current collector is not particularly limited as long as it has conductivity without causing a chemical change in a battery, and for example, stainless steel, aluminum, nickel, titanium, fired carbon, or aluminum or stainless steel that is surface-treated with one of carbon, nickel, titanium, silver, and the like may be used. Also, the positive electrode current collector may typically have a thickness of 3 um to 500 µm, and microscopic irregularities may be formed on the surface of the current collector to improve the adhesion of the positive electrode active material. For example, the positive electrode current collector may be used in various forms such as a film, a sheet, a foil, a net, a porous body, a foam, a non-woven body, and the like.

The positive electrode active material layer may include a conductive material and a binder, together with a positive electrode active material.

At this time, the positive electrode active material may be included in a content of 80 wt% to 99 wt%, more specifically 85 wt% to 98 wt% with respect to the total weight of the positive electrode active material layer. When included in the above content range, excellent capacity properties may be exhibited.

At this time, the conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fiber; metal powder or metal fiber of such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 1 wt% to 30 wt% based on the total weight of the positive electrode active material layer.

The binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be manufactured according to a typical method for manufacturing a positive electrode except that the positive electrode active material described above is used. Specifically, the positive electrode may be manufactured by applying a positive electrode mixture, which is prepared by dissolving or dispersing the positive electrode active material described above, and selectively a binder and a conductive material in a solvent, on a positive electrode current collector, followed by drying and roll-pressing. At this time, the type and content of the positive electrode active material, the binder, and the conductive material are as described above. Alternatively, in another method, the positive electrode may be manufactured by casting the positive electrode mixture on a separate support, and then laminating a film peeled off from the support on a positive electrode current collector.

The solvent may be a solvent commonly used in the art, and may be dimethyl sulfoxide (DMSO), isopropyl alcohol, N-methylpyrrolidone (NMP), acetone, water, or the like. Any one thereof or a mixture of two or more thereof may be used. The amount of the solvent to be used is sufficient if the solvent may dissolve and disperse the positive electrode active material, the binder, and the conductive material in consideration of the applying thickness of a slurry and preparation yield, and thereafter, have a viscosity which may exhibit excellent thickness uniformity during application for manufacturing a positive electrode.

### Lithium secondary battery

In addition, the present invention may manufacture an electrochemical device including the positive electrode. Specifically, the electrochemical device may be a battery, a capacitor, or the like, and more specifically, may be a lithium secondary battery.

Specifically, the lithium secondary battery includes a positive electrode, a negative electrode positioned opposing the positive electrode, a separator interposed between the positive electrode and the negative electrode, and an electrolyte, and since the positive electrode is the same as described above, a detailed description thereof will be omitted, and hereinafter, only the rest of the components will be described in detail.

Also, the lithium secondary battery may selectively further include a battery case for accommodating an electrode assembly composed of the positive electrode, the negative electrode, and the separator, and a sealing member for sealing the battery case.

In the above lithium secondary battery, the negative electrode includes a negative electrode current collector and a negative electrode active material layer positioned on the negative electrode current collector.

The negative electrode current collector is not particularly limited as long as it has high conductivity without causing a chemical change in a battery, and for example, copper, stainless steel, aluminum, nickel, titanium, fired carbon, copper or stainless steel that is surface-treated with one of carbon, nickel, titanium, silver, and the like, an aluminum-cadmium alloy, and the like may be used. Also, the negative electrode current collector may typically have a thickness of 3 um to 500 µm, and as in the case of the positive electrode current collector, microscopic irregularities may be formed on the surface of the current collector to improve the adhesion of a negative electrode active material. For example, the negative electrode current collector may be used in various forms such as a film, a sheet, a foil, a net, a porous body, a foam, and a non-woven body.

The negative electrode active material layer selectively includes a binder and a conductive material in addition to a negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, or amorphous carbon; a metallic compound alloyable with lithium such as Si, Al, Sn, Pb, Zn, Bi, In, Mg, Ga, Cd, an Si alloy, an Sn alloy, or an Al alloy; a metal oxide capable of doping and undoping lithium such as SiO_{β}(0<β< 2), SnO₂, a vanadium oxide, or a lithium vanadium oxide; or a composite including the metallic compound and the carbonaceous material such as an Si-C composite or an Sn-C composite, and any one thereof or a mixture of two or more thereof may be used. Also, a metal lithium thin film may be used as the negative electrode active material. Also, low crystalline carbon, high crystalline carbon, and the like may all be used as a carbon material. Representative examples of the low crystalline carbon may include soft carbon and hard carbon, and representative examples of the high crystalline carbon may include irregular, planar, flaky, spherical, or fibrous natural graphite or artificial graphite, Kish graphite, pyrolytic carbon, mesophase pitch-based carbon fiber, meso-carbon microbeads, mesophase pitches, and high-temperature sintered carbon such as petroleum or coal tar pitch derived cokes.

The negative electrode active material layer may be included in an amount of 80 wt% to 99 wt% based on the total weight of the negative electrode active material layer.

The binder is a component for assisting in bonding between a conductive material, an active material, and a current collector, and may typically be added in an amount of 0.1 wt% to 10 wt% based on the total weight of a negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber, nitrile-butadiene rubber, fluorine rubber, various copolymers thereof, and the like.

The conductive material is a component for further improving the conductivity of a negative electrode active material, and may be added in an amount of 10 wt% or less, preferably 5 wt% or less, based on the total weight of the negative electrode active material layer. The conductive material is not particularly limited as long as it has conductivity without causing a chemical change in the battery. For example, graphite such as natural graphite or artificial graphite; carbon black such as acetylene black, Ketjen black, channel black, furnace black, lamp black, and thermal black; conductive fiber such as carbon fiber and metal fiber; metal powder such as fluorocarbon powder, aluminum powder, and nickel powder; a conductive whisker such as zinc oxide and potassium titanate; a conductive metal oxide such as titanium oxide; or a conductive material such as a polyphenylene derivative, and the like may be used.

The negative electrode active material layer may be prepared by applying a negative electrode mixture material, which is prepared by dissolving or dispersing a negative electrode active material and selectively a binder and a conductive material in a solvent, on a negative electrode current collector, followed by drying. Alternatively, the negative electrode active material layer may be prepared by casting the negative electrode mixture material on a separate support, and then laminating a film peeled off from the support on a negative electrode current collector.

Meanwhile, in the lithium secondary battery, a separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferred. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Also, a coated separator including a ceramic component or a polymer material may be used to secure heat resistance or mechanical strength, and may selectively be used in a single-layered or a multilayered structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, or the like, which may be used in the manufacturing of a lithium secondary battery, but is not limited thereto.

Specifically, the electrolyte may include an organic solvent and a lithium salt.

As the organic solvent, any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methylethyl carbonate (MEC), ethylmethyl carbonate (EMC), ethylene carbonate (EC), or propylene carbonate (PC); an alcohol-based solvent such as ethyl alcohol or isopropyl alcohol; nitriles such as R-CN (wherein R is a linear, branched, or cyclic C2 to C20 hydrocarbon group, and may include a double-bond aromatic ring or ether bond); amides such as dimethylformamide; dioxolanes such as 1,3-dioxolane; or sulfolanes may be used. Among the above, a carbonate-based solvent is preferred, and a mixture of a cyclic carbonate (e.g., ethylene carbonate or propylene carbonate) having high ionic conductivity and high permittivity, which may increase charge/discharge performance of the battery, and a low-viscosity linear carbonate-based compound (e.g., ethylmethyl carbonate, dimethyl carbonate, or diethyl carbonate) is more preferred. In this case, the performance of the electrolyte solution may be excellent when the cyclic carbonate and the chain carbonate are mixed in a volume ratio of about 1:1 to about 1:9.

As the lithium salt, any compound may be used without particular limitation as long as it can provide lithium ions used in a lithium secondary battery. Specifically, as the lithium salt, LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The lithium salt may be used in a concentration range of 0.1 M to 2.0 M. When the concentration of the lithium salt is in the above range, the electrolyte has suitable conductivity and viscosity, thereby exhibiting excellent performance, and lithium ions may effectively move.

In the electrolyte, in order to improve the lifespan properties of a battery, suppress the decrease in battery capacity, and improve the discharge capacity of the battery, one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included. At this time, the additive may be included in an amount of 0.1 wt% to 5 wt% based on the total weight of the electrolyte.

The lithium secondary battery including the positive electrode active material according to the present invention as describe above stably exhibits excellent discharging capacity, output properties, and lifespan properties, and thus, are useful for portable devices such as a mobile phone, a notebook computer, and a digital camera, and in the field of electric cars such as a hybrid electric vehicle (HEV).

Accordingly, according to another embodiment of the present invention, a battery module including the lithium secondary battery as a unit cell, and a battery pack including the battery module are provided.

The battery module or the battery pack may be used as a power source of one or more medium-and-large-sized devices such as a power tool, an electric car including an electric vehicle (EV), a hybrid electric vehicle (HEV), and a plug-in hybrid electric vehicle (PHEV), or a power storage system.

The external shape of the lithium secondary battery of the present invention is not particularly limited, but may be have a cylindrical shape using a can, a square shape, a pouch shape, a coin shape, or the like.

The lithium secondary battery according to the present invention may be used in a battery cell used as a power source for a small device, and may also be preferably used as a unit cell in a medium-and-large-sized battery module including a plurality of battery cells.

### MODE FOR CARRYING OUT THE INVENTION

Hereinafter, embodiments of the present invention will be described in detail so that those skilled in the art may easily carry out the present invention. However, the present invention may be embodied in many different forms, and is not limited to the embodiments set forth herein.

### Examples and Comparative Examples

### Example 1

A trace amount of Al(OH)₃ is added to a positive electrode active material precursor having a composition denoted by Ni_{0.89}Co_{0.04}Mn_{0.07}(OH)₂, and a lithium raw material LiOH·H₂O was added thereto such that the molar ratio of Li/Metal(Ni+Co+Mn+Al) was to be 1.05, and then mixed to prepare a mixture. The mixture was introduced into an alumina crucible, and subjected to primary firing for 5 hours at 720 °C in an oxygen atmosphere to produce a primary fired product.

Ni(OH)₂ was mixed with the primary fired product such that the mol% of nickel contained therein was to be 0.02 mol% based on the total number of moles of metals contained in the positive electrode active material precursor, and then the mixture was subjected to secondary firing for 5 hours at 790 °C in an oxygen atmosphere, washed with deionized water, filtered using a filter press, and then dried in a vacuum oven at 130 °C to prepare a lithium transition metal oxide.

Thereafter, 1000 ppm of boric acid (H₃BO₃) was mixed with the lithium transition metal oxide, and heat-treated for 5 hours at 295 °C in an atmospheric atmosphere to prepare a lithium transition metal oxide (positive electrode active material A) having a coating layer containing boron.

### Example 2

A positive electrode active material B was prepared in the same manner as in Example 1, except that Ni(OH)₂ was mixed such that the mol% of nickel contained in the Ni(OH)₂ was to be 0.06 mol% based on the total number of moles of the metals contained in the positive electrode active material precursor.

### Example 3

A positive electrode active material C was prepared in the same manner as in Example 1, except that Ni(OH)₂ was mixed such that the mol% of nickel contained in the Ni(OH)₂ was to be 0.1 mol% based on the total number of moles of the metals contained in the positive electrode active material precursor.

### Example 4

A positive electrode active material D was prepared in the same manner as in Example 1, except that the secondary firing was performed at 800 °C in an oxygen atmosphere (greater than 90 vol% of oxygen).

### Example 5

A positive electrode active material E was prepared in the same manner as in Example 1, except that Ni(OH)₂ was mixed such that the mol% of nickel contained in the Ni(OH)₂ was to be 0.06 mol% based on the total number of moles of the metals contained in the positive electrode active material precursor, and the secondary firing was performed at 800 °C in an oxygen atmosphere (greater than 90 vol% of oxygen).

### Example 6

A positive electrode active material F was prepared in the same manner as in Example 1, except that Ni(OH)₂ was mixed such that the mol% of nickel contained in the Ni(OH)₂ was to be 0.1 mol% based on the total number of moles of the metals contained in the positive electrode active material precursor, and the secondary firing was performed at 800 °C in an oxygen atmosphere (greater than 90 vol% of oxygen).

### Example 7

A positive electrode active material G was prepared in the same manner as in Example 1, except that the secondary firing was performed at 810 °C in an oxygen atmosphere (greater than 90 vol% of oxygen).

### Example 8

A positive electrode active material H was prepared in the same manner as in Example 1, except that Ni(OH)₂ was mixed such that the mol% of nickel contained in the Ni(OH)₂ was to be 0.06 mol% based on the total number of moles of the metals contained in the positive electrode active material precursor, and the secondary firing was performed at 810 °C in an oxygen atmosphere (greater than 90 vol% of oxygen).

### Example 9

A positive electrode active material I was prepared in the same manner as in Example 1, except that Ni(OH)₂ was mixed such that the mol% of nickel contained in the Ni(OH)₂ was to be 0.1 mol% based on the total number of moles of the metals contained in the positive electrode active material precursor, and the secondary firing was performed at 810 °C in an oxygen atmosphere (greater than 90 vol% of oxygen).

### Comparative Example 1

A trace amount of Al(OH)₃ is added to a positive electrode active material precursor having a composition denoted by Ni_{0.89}Co_{0.04}Mn_{0.07}(OH)₂, and a lithium raw material LiOH·H₂O was added thereto such that the molar ratio of Li/Metal(Ni+Co+Mn+Al) was to be 1.05, and then mixed to prepare a mixture. The mixture was introduced into an alumina crucible, and subjected to primary firing for 5 hours at 720 °C in an oxygen atmosphere to produce a primary fired product.

The primary fired product was subjected to secondary firing for 5 hours at 790 °C in an oxygen atmosphere, washed with deionized water, filtered using a filter press, and then dried in a vacuum oven at 130 °C to prepare a lithium transition metal oxide.

Thereafter, 1000 ppm of boric acid (H₃BO₃) was mixed with the lithium transition metal oxide, and heat-treated for 5 hours at 295 °C in an atmospheric atmosphere to prepare a lithium transition metal oxide (positive electrode active material J) having a coating layer containing boron.

### Comparative Example 2

A positive electrode active material K was prepared in the same manner as in Example 1, except that Ni(OH)₂ was mixed such that the mol% of nickel contained in the Ni(OH)₂ was to be 0.01 mol% based on the total number of moles of the metals contained in the positive electrode active material precursor.

### Comparative Example 3

A positive electrode active material L was prepared in the same manner as in Example 1, except that Ni(OH)₂ was mixed such that the mol% of nickel contained in the Ni(OH)₂ was to be 0.15 mol% based on the total number of moles of the metals contained in the positive electrode active material precursor.

The primary firing temperature, the secondary firing temperature, and the addition amount of Ni(OH)₂ in each of Examples 1 to 9 and Comparative Examples 1 to 3 are summarized and shown in Table 1 below.

**[Table 1]**

| | Primary firing | Secondary firing | |
|---|---|---|---|
| | Temperature (°C) | Temperature (°C) | Addition amount of Ni(OH)₂ (mol%) |
| Example 1 | 720 | 790 | 0.02 |
| Example 2 | 720 | 790 | 0.06 |
| Example 3 | 720 | 790 | 0.1 |
| Example 4 | 720 | 800 | 0.02 |
| Example 5 | 720 | 800 | 0.06 |
| Example 6 | 720 | 800 | 0.1 |
| Example 7 | 720 | 810 | 0.02 |
| Example 8 | 720 | 810 | 0.06 |
| Example 9 | 720 | 810 | 0.1 |
| Comparative Example 1 | 720 | 790 | - |
| Comparative Example 2 | 720 | 790 | 0.01 |
| Comparative Example 3 | 720 | 790 | 0.15 |

### Experimental Examples

### Experimental Example 1: Evaluation of properties of coin-cell

Lithium secondary batteries were manufactured using the positive electrode active materials prepared in Examples and Comparative Examples, and the initial charge/discharge capacity, charge/discharge efficiency, and discharge resistance after 30 cycles were evaluated for each lithium secondary battery.

Specifically, each of the positive electrode active materials prepared in Examples and Comparative Examples, a FX35 conductive material, a KF9709 binder, and a BM740H binder were mixed at a weight ratio of 97.5:1.0:1.4:0.1 in an NMP solvent to prepare a positive electrode slurry. The positive electrode slurry was applied on one surface of an aluminum current collector, dried at 130°C, and then roll-pressed to manufacture a positive electrode. Meanwhile, as a negative electrode active material, a Li metal disk was used. A separator was interposed between the positive electrode and the negative electrode manufactured as described above to manufacture an electrode assembly, and the electrode assembly was placed inside a battery case, and then an electrolyte solution was injected into the case to manufacture a lithium secondary battery. At this time, as the electrolyte solution, an electrolyte solution in which 1 M of LiPF was dissolved in an organic solvent of EC/EMC/DMC (3/3/4, vol%) was used to manufacture the lithium secondary battery.

The lithium secondary batteries manufactured as described above were subjected to CC/CV mode charging to 4.25 V at 0.1 C constant current at 25°C (end current 0.05 C), and then subjected to CC mode discharging to 3.0 V, during which an initial charge capacity, an initial discharge capacity, and charge/discharge efficiency were obtained (which are shown in Table 2 below), and the charge/discharge cycle was repeated 30 times in the range of 3.0 V to 4.24 V at 0.33 C constant current at 45 °C. At this time, during the 30^{th} charge/discharge cycle, a voltage drop for 60 seconds after the start of discharging was measured, and the voltage drop was divided by an applied current value to calculate discharge resistance, which is shown as a value representing the lifespan properties shown in Table 2 below. Meanwhile, in the entire process, it was set that 1 C = 200 mA/g.

**[Table 2]**

| | Initial properties 0.1C/0.1C_CV0.05C at 25°C | | | Lifespan properties 0.33C/0.33C_CV0.0 5C at 45°C |
|---|---|---|---|---|
| | Initial charge capacity (mAh/g) | Initial discharge capacity (mAh/g) | Charge/dis charge efficiency (%) | DCIR after 30 cycles (Ω) |
| Example 1 | 233.6 | 210.7 | 90.2 | 18.4 |
| Example 2 | 235.7 | 211.9 | 89.9 | 18.5 |
| Example 3 | 236.3 | 213.2 | 90.0 | 17.7 |
| Example 4 | 236.3 | 213.2 | 90.2 | 16.8 |
| Example 5 | 238.3 | 214.4 | 90.0 | 18.2 |
| Example 6 | 236.9 | 213.0 | 89.9 | 18.0 |
| Example 7 | 237.0 | 213.6 | 90.1 | 17.1 |
| Example 8 | 236.5 | 213.1 | 90.1 | 17.4 |
| Example 9 | 237.7 | 213.9 | 90.0 | 17.6 |
| Comparative Example 1 | 233.1 | 209.6 | 89.9 | 19.3 |
| Comparative Example 2 | 233.2 | 209.9 | 90.0 | 19.4 |
| Comparative Example 3 | 233.7 | 209.8 | 89.8 | 20.3 |

Referring to Table 2 above, it can be confirmed that the batteries including the positive electrode active materials prepared in Examples 1 to 9 have excellent initial charge/discharge capacity and charge/discharge efficiency, and have significantly excellent lifespan properties compared to those of the batteries including the positive electrode active materials prepared in Comparative Examples 1 to 3.

As a result, it can be seen that as in the method for preparing a positive electrode active material according to the present invention, when preparing a positive electrode active material with a high nickel content, if a positive electrode active material precursor and a lithium-containing raw material are fired twice, and a nickel compound in a specific amount is added before the secondary firing to prepare a positive electrode active material, a battery using the positive electrode active material has excellent initial properties, as well as significantly improved lifespan properties.

## Claims

1. A method for preparing a positive electrode active material, comprising:
(A) mixing a positive electrode active material precursor containing 80 mol% or greater of nickel (Ni) in all metals with a lithium-containing raw material, and then performing primary firing to prepare a primary fired product; and
(B) mixing the primary fired product and a nickel compound, and then performing secondary firing to prepare a lithium transition metal oxide,
wherein the nickel compound is added such that the mol% of nickel contained in the nickel compound is greater than 0.01 mol% to less than 0.15 mol% based on a total number of moles of the metals contained in the positive electrode active material precursor.

2. The method of claim 1, wherein the positive electrode active material precursor has a composition represented by Formula 1-1 or Formula 1-2 below:
[Formula 1-1] Niₐ₁Co_{b1}Mn_{c1}M¹_{d1}(OH)₂
[Formula 1-2] Niₐ₁Co_{b1}Mn_{c1}M¹_{d1}O·OH
wherein in Formula 1-1 and Formula 1-2 above,
M¹ is one or more selected from Al, Zr, B, W, Mg, Ce, Hf, Ta, La, Ti, Sr, Ba, Ce, Hf, F, P, S, Y, and La, and
0.80≤a1<1.0, 0<b1≤0.20, 0<c1≤0.20, 0≤d1≤0.10, and a1+b1+c1+d1=1.

3. The method of claim 1, wherein the nickel compound has an average particle diameter(D₅₀) of less than 3 µm.

4. The method of claim 1, wherein the nickel compound is one or more selected from Ni(OH)₂, NiO, NiCO₃, NiSO₄, NiF₂, NiCl₂, NiBr₂, NiI₂, 2Ni(OH)₂·4H₂O, NiC₂O₄·2H₂O, Ni(NO₃)₂·6H₂O, and NiSO₄·6H₂O.

5. The method of claim 1, wherein the nickel compound is added such that the mol% of nickel contained in the nickel compound is greater than 0.01 mol% to 0.14 mol% or less based on the total number of moles of the metals contained in the positive electrode active material precursor.

6. The method of claim 1, wherein the nickel compound is added such that the mol% of nickel contained in the nickel compound is 0.02 mol% to 0.10 mol% based on the total number of moles of the metals contained in the positive electrode active material precursor.

7. The method of claim 1, wherein the primary firing is performed at a temperature between 600°C and 750°C.

8. The method of claim 1, wherein the secondary firing is performed at a temperature between 750°C and 900°C.

9. The method of claim 1, wherein the secondary firing is performed at a temperature higher than that of the primary firing.

10. The method of claim 1, further comprising (C) forming a coating layer by mixing a coating element-containing raw material with the lithium transition metal oxide and heat-treating.
